# EUROPEAN PATENT APPLICATION

(11) **EP 1 227 328 A1**
(43) Date of publication of application: **31.07.2002**
(21) Application number: 01101952.8
(22) Date of filing: 29.01.2001
(51) Int. Cl.: G01P 21/00, B60G 17/015

(54) **Accelerometer calibration**

(71) Applicant: Ford Global Technologies, Inc., Dearborn, Michigan 48126 (US)
(72) Inventor: Rothoff, Marcus, 417 29 Göteborg (SE)
(74) Representative: Lindberg, Klas Valter Bo

(57) **Abstract**

The invention relates to a calibration method for a system with at least two accelerometers (5), comprising the steps of arranging said accelerometers fixed on a vehicle (1), connecting said accelerometers (5) to a control unit and providing said vehicle (1) on a reference plane (11). The reference plane (11) has a known propagation angle to be used as a reference relative to which an offset value of each accelerometer (5) is established. Said offset value of each accelerometer is stored in said control unit.

The invention also relates to a calibrated accelerometer system and a vehicle (1) provided with said system.

## Description

### Field of the Invention

The present invention relates to a calibration method for a system with at least two accelerometers and a calibrated accelerometer system. The present invention also relates to a vehicle provided with a calibrated accelerometer system.

### Technical Background

Accelerometers are used for many applications, such as IVD (Integrated Vehicle Dynamic) and AYC (Active Yaw Control) systems in vehicles. The demands on process tolerance and accuracy for such systems are high. Accelerometers that meet the demands on high accuracy need to be of high quality and are often expensive.

When mounting accelerometers on bodies to measure the acceleration, the static output is important. If the mounting angle is not absolutely correct the influence of earth gravitation is nonlinearly dependent on the angle, due to the process tolerances.

If the accelerometer is correctly mounted the output value will be a specific value. However, with a slightly angled accelerometer (vertically for a lateral measuring accelerometer) the output will deviate from this value. Calibration is often made with an offset. However, with an offset the non-linearity due to the angle is not considered. This will result in large output deviations when the accelerometer is subject to accelerations in non-measured directions. Since this is often the case in vehicles there is a need for a more reliable and accurate calibration method for accelerometers in vehicles and, if possible, a method that does not require costly accelerometers to provide reliable output.

A further issue is to provide a method that can provide accurate results even if the mounting angle is not perfect, which is especially important for a system of accelerometers, for which the mounting work is very difficult and time-consuming in order to achieve proper accuracy.

### Summary of the Invention

The object of the present invention is to provide a method that overcomes the above issues, and makes it possible to provide an accurate calibration method for a system with at least two accelerometers on a vehicle.

A further object is to provide a calibrated accelerometer system, which achieves these and other objects but is yet inexpensive and especially simple to manufacture and install in a vehicle.

These and other objects are achieved by an accelerometer calibration method according to claim 1. Preferred embodiments of the invention are defined in the dependent claims.

According to the invention there is provided a calibration method for a system with at least two accelerometers, comprising the steps of arranging said accelerometers fixed on a vehicle, connecting said accelerometers to a control unit and providing said vehicle on a reference plane, which reference plane has a known propagation angle, using said reference plane as a reference relative to which reference plane an offset value of each accelerometer is established and storing said offset value of the accelerometer in said control unit.

This method makes it possible to include the non-linear effects appearing on moving bodies, such as vehicles. Thus, when calibrating accelerometers the original output offset is read. With this output the static angle of the accelerometer can be estimated and saved as a non-linear calibration factor. According to the invention there is provided a preferred method, wherein said reference plane propagates in the horizontal direction. This method provides a suitable reference plane for most common vehicles.

In order to provide an exact and accurate calibration method the system comprises at least three accelerometers for determining a first local reference plane of said vehicle. The invention makes it possible to use as many accelerometers as required in order to determine a reference plane or whatever desired with sufficient accuracy, since the mounting error of each accelerometer easily can be disregarded with the present invention. Manufacturing cost and installation cost for the system can thus be lower. A further advantage of the method according to the invention is that since the internal tolerance of the accelerometer is accounted for in the calibration method, less attention is needed for the tolerance offsets in an accelerometer and hence less costly accelerometers may be used without losing accuracy.

In a further preferred method according to the invention the calibration is made on capacitive accelerometers. This method provides the advantage of being able to perform measurements on both static and dynamic angles of the vehicle for different purposes. Of course, other kinds of accelerometers, such as piezoelectric, unbonded and bonded strain gage accelerometers and servo-accelerometers are just as appropriate for the inventive calibration method.

In an alternative embodiment of the present invention an accelerometer system calibrated according to the above-described method is arranged to determine a first reference plane of a vehicle. In a preferred embodiment the accelerometer system is arranged on a wheel suspension of said vehicle determining said first reference plane for said wheel suspension. In a further preferred embodiment of the present invention the accelerometer system comprises a measuring system arranged on the body of said vehicle to determine the body angle of said vehicle and a control unit to actively control the distance between said body and a suspended wheel of said vehicle by means of a springing system with calibrated output signals from said measuring and said accelerometer system.

The use of accelerometers in places difficult to reach provides a significant advantage due to the fact that the accelerometers are easy to install and have a suitable size. A further advantage is the ability to withstand harsh environment and tough conditions that makes the accelerometers especially useful for vehicles.

The position of each accelerometer in the system is determined in the x-, y-, and z-direction. This arrangement makes it possible to provide a more precise output value from the system and a further advantage is that these positions can be measured after the accelerometers have been mounted fixed on the vehicle.

### Brief Description of the Drawing

A currently preferred method and embodiment of the present invention will now be described in more detail, with reference to the accompanying drawing.

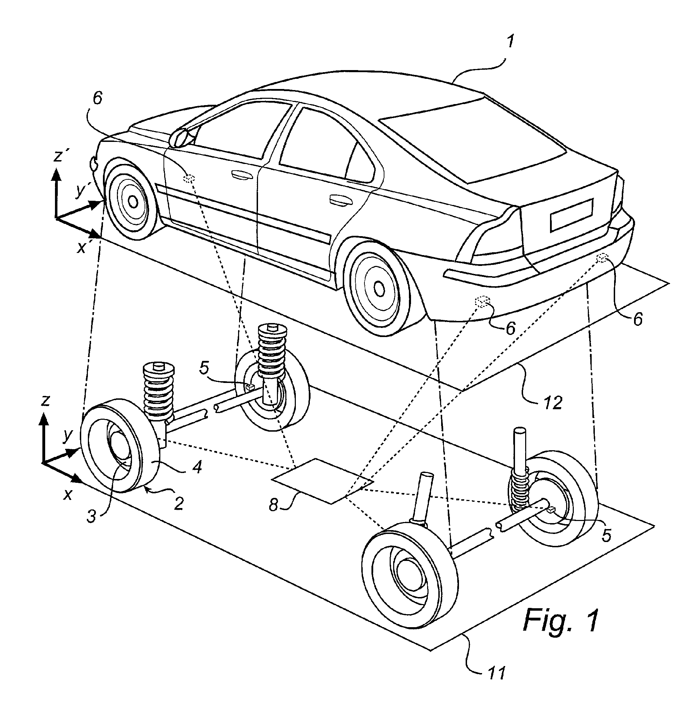

Fig. 1 is an exploded perspective view of an embodiment of a vehicle with a calibrated accelerometer system according to the invention.

### Detailed Description of the Preferred Embodiment

The embodiment of the invention, which will be described in the following, is related to a height estimate system for a vehicle. A preferred method and embodiment of the invention will be described with reference to the accompanying drawing.

Referring now to Fig. 1, a vehicle 1 is provided with fixedly arranged accelerometers 5. In a preferred embodiment of the invention each accelerometer 5 is mounted on a hub 3. Each wheel is provided with an accelerometer mounted in a predetermined position. The relative positions of the accelerometers are stored in a control unit 8, which control unit is connected to the accelerometers 5.

In accordance with a preferred method of the invention there is provided a reference plane 11, which reference plane 11 has a known propagation angle. The reference plane 11 propagates in the horizontal direction according to a preferred method. The reference plane 11 is used as a reference relative to which reference plane an offset value of each accelerometer 5 is established. The offset value of the accelerometer is stored in said control unit 8.

By the inventive method there is provided a system with at least one internal reference plane 11; 11' of the vehicle relative to which plane any vertical displacement of a hub can be detected by the corresponding accelerometer connected to the system. The vertical displacement of a hub 3 or a wheel or other suspended parts relative to the internal reference plane can thus be detected.

According to an alternative embodiment of the invention the reference plane may be provided on the body of the vehicle. The reference plane of the body of the vehicle can also consist of an accelerometer system calibrated according to the inventive method. The vertical displacement of the vehicle is typically caused by roll, pitch, heave and even yaw.

In another preferred embodiment of the invention there is provided accelerometers on both the body and e.g. the hubs of the vehicle, which makes displacements of the suspension system or parts thereof relative to the body detectable.

In order to provide requisite accuracy of the accelerometer system the number of accelerometers used to constitute the internal reference plane is of importance. Mathematical principles teach that a plane can be formed by three given points (preferably not arranged in a line though). A plane can also be formed by two given points and a given angle relative a line defined by the two points. Thus, at least two accelerometers in given positions are needed to define an internal reference plane since a reference angle can be detected and stored in the control unit by an accelerometer during the calibration. An additional number of accelerometers used for the purpose of defining deviations relative to a determined reference plane can also be used as there are different well-known mathematical algorithms that can be used to achieve sufficient accuracy in the determination of the reference plane using a multitude of data.

Preferably the accelerometers can also be distributed on the vehicle to cover relevant points of the vehicle. As indicated in the above there are various appropriate mathematical algorithms depending on the number of accelerometers used.

For a stiff body, like e.g. a vehicle body, three accelerometers in different given positions are likely to give accurate results of the body angle, relative to the internal reference plane, with respect to e.g. roll and pitch. To detect further deviations relative to a given reference plane an additional number of accelerometers calibrated according to the inventive method are preferably used. Thus, deviations relative the reference plane depending on e.g. roll can be separated from deviations due to the vehicle running uphill. The advantages of using the inventive calibration method in the preferred embodiment will know be described more in detail.

To include the non-linear effects appearing on moving bodies, like vehicles, the calibration process could include a non-linear calibration factor. Thus, when calibrating accelerometers the original offset of the output is read. With this output the static angle of the accelerometer should be estimated and saved as a non-linear calibration factor.

The static angle of each accelerometer is to be used in the control unit with regard to measured, estimated or calculated acceleration in non-measured directions. This can be achieved by using e.g. look-up tables. This will give a more accurate accelerometer output that is not dependent on accelerations in non-measured directions, such as side forces on a vehicle for a laterally mounted accelerometer.

An accelerometer arranged stationary on Earth with its sensitive axis pointing vertically will give an output signal equivalent to one g, or 32.2 ft/s² (9.8 m/s²), assuming that it responds to static acceleration inputs. If this accelerometer is rotated through 90 degrees and left stationary with its sensitive axis pointing parallel to the surface of the Earth, it will produce an output signal equivalent to zero g. In a preferred embodiment of the method the calibration is made on capacitive accelerometers (5).

This method provides the advantage of being able to perform measurements on both static and dynamic angles of the vehicle for different purposes. Of course, other kinds of accelerometers 5, such as piezoelectric, unbonded and bonded strain gauge accelerometers and servo-accelerometers are just as appropriate for the inventive calibration method.

In a second preferred embodiment of the present invention accelerometers are mounted on the body of the vehicle to form a measuring system 6. The accelerometers are then calibrated according to the inventive method. A measuring system 6 is arranged on the body of said vehicle 1 in order to determine the body angle reference plane 12 of said vehicle. The measuring system preferably uses accelerometers 6 in accordance with the inventive method to determine the offset to a second reference plane 12. A second system of accelerometers 5 is mounted on the hub 3 as described above. A control unit is provided to actively control the distance between said body and said suspended wheel of said vehicle by means of a springing system with calibrated output signals from said measuring 6 and said accelerometer 5 system.

The present invention should not be considered limited to the above-described preferred embodiment, but rather includes all possible variations covered by the scope defined by the appended claims.

It is thus to be appreciated that the above-described calibration method need not only be performed on a car but is also be appropriate for other vehicles such as trucks, vans, tanks etc.

The exact position of the accelerometers can also be modified in order to meet specific requirements and are in the above only given as a guidance. There are various types of accelerometers other than the above listed that are suitable for the proposed method and within the field of invention.

## Claims

1. A calibration method for a system with at least two accelerometers (5), comprising the steps of arranging said accelerometers fixed on a vehicle (1), connecting said accelerometers (5) to a control unit (8) and providing a reference plane (11) having a determined propagation angle,
arranging said vehicle (1) on said reference plane (11), using said reference plane (11) as a reference relative to which an offset value of each accelerometer (5) is established and storing said offset value of each accelerometer in said control unit (8).

2. A calibration method in accordance with claim 1, wherein said reference plane (11) propagates in the horizontal direction.

3. A calibration method according to claim 1, wherein the system comprises at least three accelerometers (5) for determining a first local reference plane (11) of said vehicle (1).

4. A calibration method according to any one of the preceding claims, wherein the calibration is made on capacitive accelerometers (5).

5. A calibration method according to any one of the preceding claims, wherein the position of each accelerometer (5) in the system is determined in the x-, y-, and z-direction.

6. An accelerometer system calibrated according to the method in any one of the preceding claims 1-5, said accelerometer system determining a first reference plane (11) of a vehicle (1).

7. An accelerometer system according to claim 6, said accelerometer system being arranged on a wheel suspension of said vehicle (1) determining said first reference plane (11) for at least one suspended wheel (2) of the vehicle (1).

8. An accelerometer system according to any one of claims 6-7, said accelerometer system comprising a measuring system (6) arranged on the body (7) of said vehicle (1) to determine a body angle reference plane (12) of said vehicle (1), a control unit (8) to actively control the distance between said body (7) and at least one suspended wheel (2), with reference to the reference planes (11, 12), of said vehicle by means of a springing system with calibrated output signals from said measuring (6) and said accelerometer (5) systems.

9. A vehicle provided with an accelerometer system according to claim 6.
